# FASCICULE DE BREVET EUROPEEN

(11) **EP 0 537 088 B1**
(45) Date de publication et mention de la délivrance du brevet: **03.01.1996**
(21) Numéro de dépôt: 92420344.1
(22) Date de dépôt: 01.10.1992
(51) Int. Cl.: F16D 13/52, F16D 13/70

(54) **Embrayage à disques structuraux en particulier en carbone-carbone**
Kupplung mit Verbundscheiben, insbesondere aus Kohlenstoff-Kohlenstoff-Verbundwerkstoff
Clutch with structural discs, especially made of carbon-carbon composite

(30) Priorité: 09.10.1991 FR 9112430
(43) Date de publication de la demande: 14.04.1993
(73) Titulaire: CARBONE INDUSTRIE, Société Anonyme, F-93176 Bagnolet Cédex (FR)
(72) Inventeur: Prud'Homme, Guy, F-69110 Ste Foy-les-Lyon (FR)
(74) Mandataire: Dalsace, Michel

(56) Documents cités:
- DE-A- 2 164 297
- DE-A- 2 460 963
- FR-A- 2 623 862
- FR-A- 2 624 571
- FR-A- 2 662 766
- FR-A- 2 669 697
- US-A- 2 036 005
- US-A- 3 189 147

## Description

La présente invention se rapporte à un embrayage à disques de friction structuraux, en particulier en carbone-carbone, comprenant:
- un volant moteur,
- un premier disque menant, réalisant une première interface non active entre lui et le volant,
- au moins un disque mené relié à un arbre de sortie, un disque menant étant éventuellement intercalé entre chaque paire adjacente éventuelle de disques menés,
- un deuxième disque menant,
- un plateau de pression, réalisant une deuxième interface non active entre lui et le deuxième disque menant,
- un couvercle comportant un mécanisme actionnable de poussée du plateau et pourvu de colonnettes logées dans des encoches radiales des disques menants et fixées au volant.

Les embrayages à friction carbone-carbone de ce type, tel que décrit dans le document de brevet FR-2 623 862, essentiellement utilisés actuellement dans des véhicules de compétition, présentent de nombreux avantages par rapport aux embrayages classiques, notamment une très bonne résistance aux fortes sollicitations, une faible usure sous forte sollicitation, une masse et une inertie réduites.

Cependant, ces embrayages posent un problème de manque de progressivité en compression des disques entraînant un fonctionnement brutal, particulièrement peu adapté aux véhicules de tourisme.

Les embrayages classiques à disques métalliques avec garnitures organiques non structurelles comprennent un volant en fonte, au moins un disque mené et un plateau de pression actionnable également en fonte, les interfaces de frottement étant fonte/matériau organique. Le disque mené est constitué d'un disque métallique pourvu d'un disque porte-garniture central et de deux anneaux de garnitures organiques. Ce disque central comporte des déformations axiales, par exemple des ondulations, qui lui permettent de créer par élasticité la course de progressivité nécessaire à une mise en compression et à un embrayage progressifs. Un embrayage monodisque comprend un tel disque mené comportant donc plusieurs pièces annulaires reliées par rivetage ou équivalent.

Le but de l'invention est de proposer un embrayage à disques structuraux qui, outre l'intérêt propre de ces disques qui est d'être réalisés d'une seule pièce et leurs capacités propres considérablement supérieures aux disques classiques, en particulier pour le carbone-carbone, présente un agencement dit de progressivité fiable et simple, tout en comportant un nombre limité de pièces constitutives.

Pour ce faire, conformément à l'invention, l'embrayage comporte un dispositif dit de progressivité intercalé dans au moins l'une des interfaces non actives et poussant le disque menant de l'interface vers le disque mené adjacent contre un agencement de butée.

Il est ainsi réalisé une mise en compression progressive des disques et donc un embrayage non brutal. La course de la progressivité est maîtrisée par la position de l'agencement de butée.

Se référant au document de brevet FR-2 669 697 déposé le 28 novembre 1990, le demandeur a procédé de sa propre initiative à une limitation et présenté des revendications séparées pour la France.

Selon un premier mode de réalisation, le dispositif de progressivité est constitué d'un anneau métallique ondulé logé dans une rainure circulaire ménagée dans la pièce formant l'interface avec le disque menant.

Cet agencement a pour avantage d'être particulièrement résistant à la force centrifuge. En effet, l'anneau autosupporte les contraintes dûes à l'effet de cette force. De plus, la rainure circulaire sur le volant et/ou sur le plateau affaiblit peu ces derniers. Enfin, le dispositif de progressivité est ainsi réalisé d'une seule pièce.

Selon un second mode de réalisation, le dispositif de progressivité est constitué d'au moins une lame élastique métallique radiale disposée contre une face d'extrémité d'une colonnette et dont l'extrémité active recourbée est en appui sur le disque menant et est logée dans une rainure radiale ménagée dans la pièce formant l'interface avec le disque menant.

Ces lames peuvent être montées sur toutes les colonnettes de l'embrayage ou non. L'on peut ainsi régler la raideur de la progressivité en installant plus ou moins de lames de progressivité.

De préférence, la lame comporte un tronçon comportant un orifice et disposé entre l'extrémité de la colonnette et la pièce formant l'interface avec le disque menant, cet orifice recevant le moyen de fixation du couvercle sur le volant.

Quant à l'agencement de butée, il est constitué, de préférence, d'au moins un épaulement ménagé sur la colonnette, sur lequel est en butée le bord de l'encoche du disque menant.

Selon une caractéristique de l'invention, un dispositif dit de plaquage est associé au dispositif de progressivité, ce dispositif de plaquage comportant un moyen de pression du disque menant de l'autre interface non active contre la pièce adjacente.

Ainsi est encore amélioré le fonctionnement de l'embrayage. En position débrayée, le jeu se répartit uniformément aux interfaces actives des disques menants et des disques menés. Le jeu d'une des interfaces non actives ou course de progressivité est défini par le positionnement de l'agencement de butée. Le jeu de l'autre interface non active est nul. La mise en compression ou embrayage se fait de façon parfaitement uniforme, sans interaction parasite au niveau des interfaces volant - premier disque menant et plateau - deuxième disque menant.

De préférence, ce dispositif de plaquage comprend au moins une lame élastique métallique disposée entre le disque menant de l'interface et le disque menant le plus proche et dont l'extrémité active recourbée vient presser le disque de l'interface contre la pièce adjacente.

Selon une variante, le dispositif de plaquage comprend deux lames disposées contre les faces latérales de la colonnette.

Selon une autre variante, les colonnettes sont en forme de U présentant un orifice du côté de la pièce de l'interface, le disque menant présente deux encoches recevant les branches de la colonnette et la lame est disposée dans l'orifice et pousse le disque menant entre les encoches.

Afin de simplifier le montage, le dispositif de progressivité et le dispositif de plaquage peuvent être en une seule pièce.

L'invention est décrite plus en détail ci-après à l'aide de figures représentant des modes de réalisation préférées.

La figure 1 est une vue partielle en perspective éclatée d'un embrayage multidisque à disques structuraux.

La figure 2 est une vue en perspective partielle d'un premier mode de réalisation d'un embrayage conforme à l'invention.

Les figures 3 et 4 sont des demi-vues en coupe d'un tel embrayage, en position débrayée et en position embrayée.

La figure 5 est une vue en perspective partielle d'un deuxième mode de réalisation d'un embrayage conforme à l'invention.

La figure 6 est une demi-vue en coupe d'un tel embrayage, en position débrayée.

La figure 7 est une vue en perspective partielle d'un troisième mode de réalisation d'un embrayage conforme à l'invention.

La figure 8 est une vue en perspective partielle d'un quatrième mode de réalisation pour un embrayage à disque mené unique conforme à l'invention.

La figure 9 est une vue en perspective partielle du même mode de réalisation pour un embrayage à deux disques menés conforme à l'invention.

La figure 10 est une vue en perspective partielle d'un cinquième mode de réalisation d'un embrayage conforme à l'invention.

La figure 11 est une demi-vue en coupe d'un tel embrayage, en position débrayée.

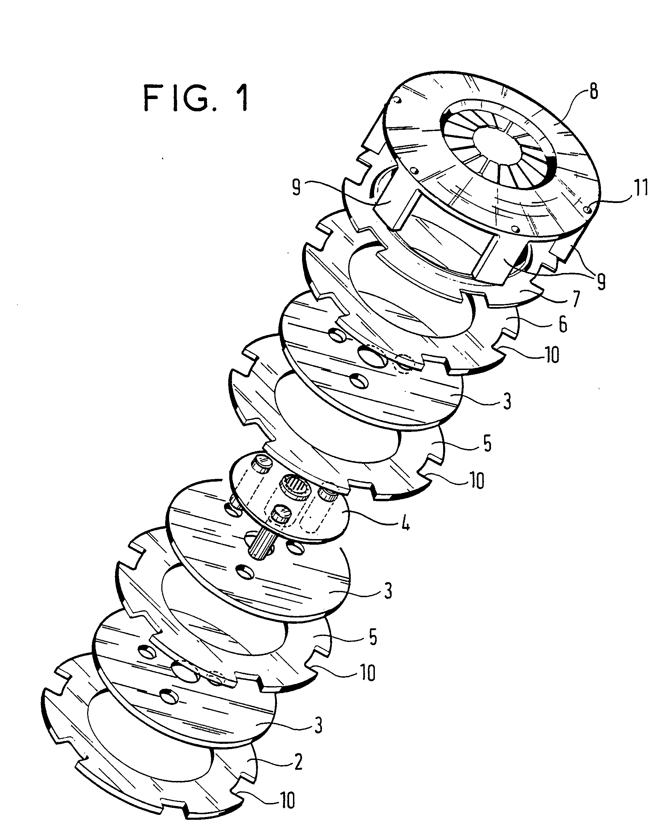

La figure 1 représente certaines pièces d'un embrayage connu dit tridisque (par analogie aux embrayages classiques à garnitures organiques). Sur le volant moteur, non représenté et qui se positionnerait à la partie inférieure de la figure, sont disposés un disque menant 2 dit premier disque menant, trois disques menés 3 reliés à un arbre de sortie par un moyeu 4, un disque menant 5 étant intercalé entre chaque paire de disques menés 3, un disque menant 6 dit deuxième disque menant, un plateau de pression 7 et un couvercle 8 comportant un mécanisme actionnable de poussée du plateau 7 et pourvu de colonnettes 9 logées dans des encoches radiales 10 des disques menants 2,3,6 et fixées au volant par une vis logée dans un alésage 11 de chaque colonnette 9 et vissée dans le volant. Les colonnettes 9 peuvent soit faire partie du couvercle 8, soit être fixées sur celui-ci par vissage ou autre.

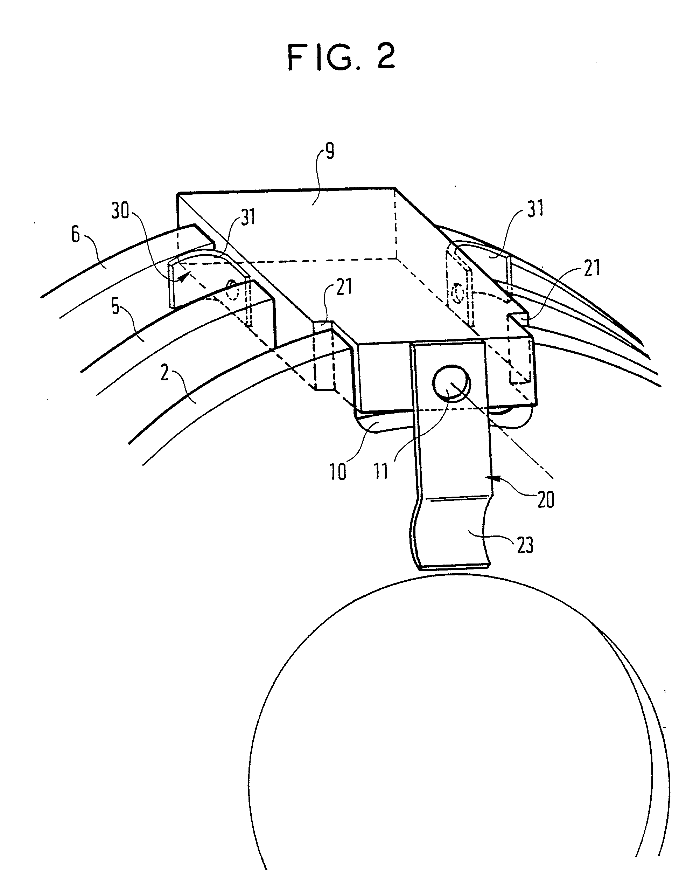

Une première variante est représentée sur les figures 2, 3 et 4. Sur la figure 2, pour plus de clarté, sont seuls représentés les disques menants 2,5,6 et une colonnette 9.

Un dispositif dit de progressivité 20 est constitué d'une lame élastique métallique dont l'extrémité active est recourbée et est en appui sur le premier disque menant 2 et dont l'extrémité de fixation est disposée sur l'extrémité, côté volant, de la colonnette 9 et comporte un orifice recevant la vis 14 de liaison du couvercle 8 avec le volant 12. A cette extrémité, la colonnette 9 est de largeur inférieure, afin de former deux épaulement de butée 21 et l'encoche 10 du premier disque menant 2 est de même de largeur inférieure à celles des encoches des autres disques 5,6, afin de pouvoir venir en butée sur les épaulements 21. A cette lame 20, est associée une rainure radiale 22 réalisée sur la face intérieure du volant 12 et dans laquelle est logée la lame 20.

Un dispositif dit de plaquage 30 est constitué de deux lames élastiques métalliques disposées de chaque côté de la colonnette 9. L'extrémité de fixation de chaque lame est reliée par rivetage sur la face latérale de la colonnette 9, entre le deuxième disque menant 6 et le disque menant 5 le plus proche et son extrémité active recourbée d'environ 90° par rapport à l'extrémité de fixation vient presser le deuxième disque 6 contre le plateau 8.

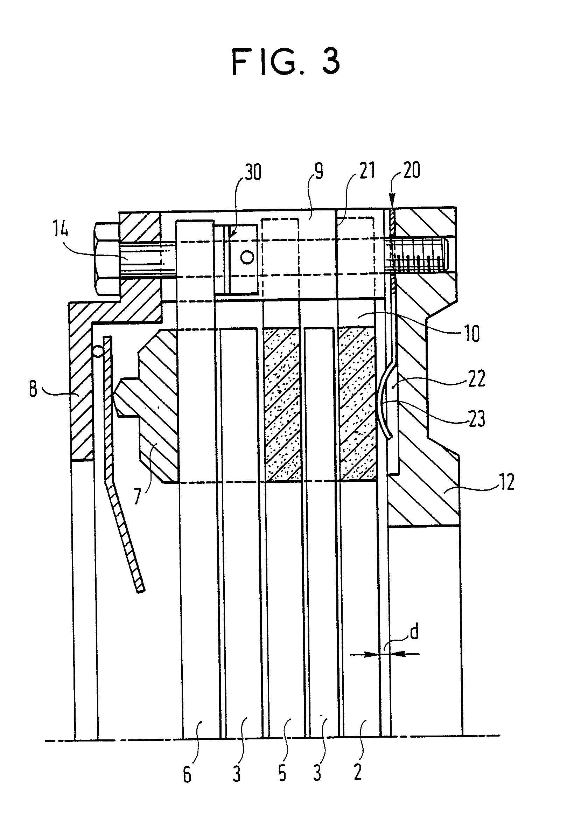

En position débrayée (figure 3), le jeu se répartit uniformément aux interfaces des disques menants 2,5,6 et des disques menés 3. Le jeu de l'interface volant 12 - premier disque 2 appelé course de progressivité d est défini par le positionnement des épaulements 21, puisque le premier disque 2 est poussé contre ces derniers par la lame 20. Le jeu de l'interface plateau 7 - deuxième disque 6 est nul, puisque ce dernier est poussé contre la plateau 8 par les lames 30.

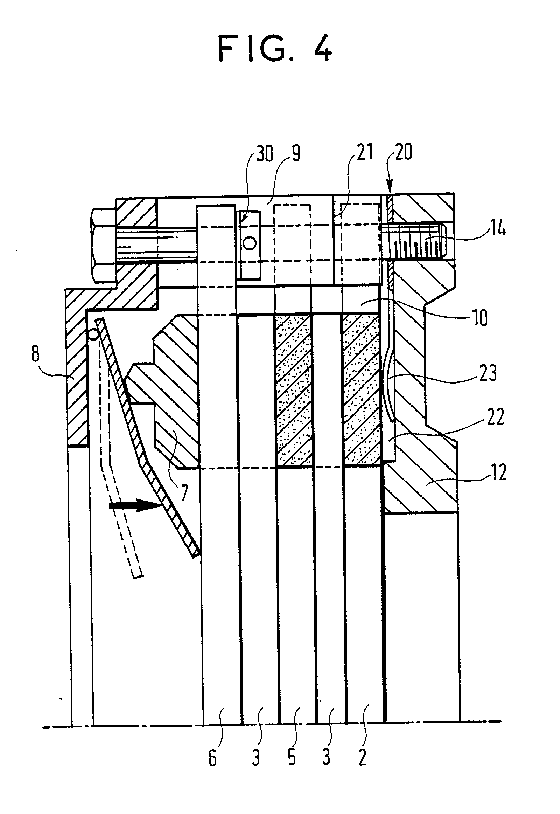

En position embrayée (figure 4), l'extrémité active de la lame 20 est comprimée dans la rainure 22 et s'escamote permettant la suppression des jeux de toutes les interfaces.

Grâce au dispositif 20, est ainsi réalisée une mise en compression progressive des disques et donc un embrayage non brutal. La course de la progressivité est maîtrisée par la position de l'agencement de butées 21.

Grâce au dispositif 30, la répartition du jeu est maximalisé aux interfaces actives et il en résulte une meilleure libération au débrayage. De plus, la mise en compression ou embrayage se fait de façon parfaitement uniforme, sans interaction parasite au niveau des interfaces volant - premier disque menant et plateau - deuxième disque menant.

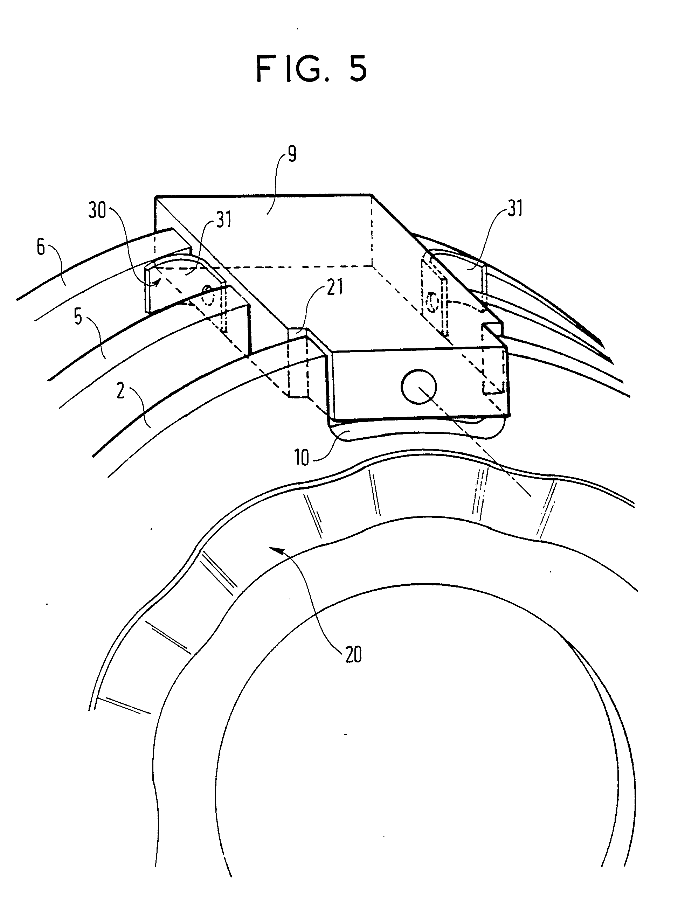

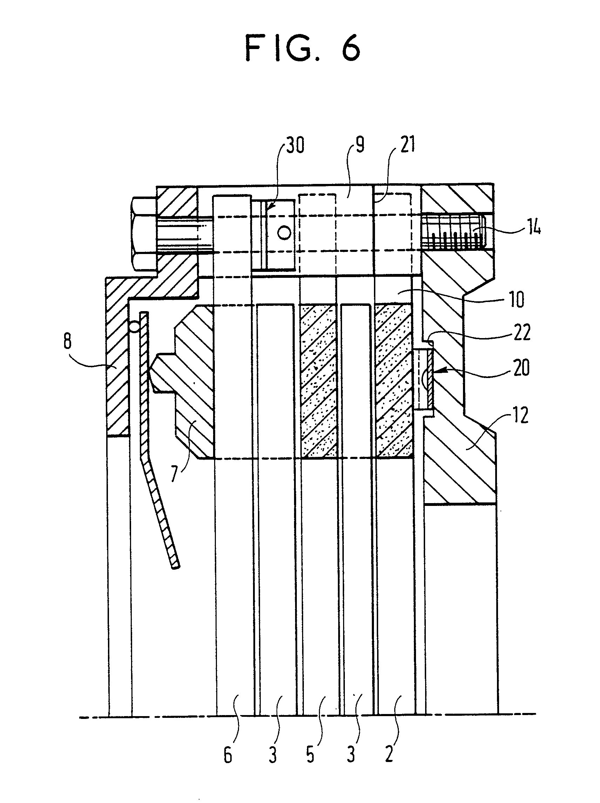

Une deuxième variante de réalisation est représentée sur les figures 5 et 6.

Le dispositif de plaquage 30 y est identique.

Le dispositif de progressivité 20 est un anneau de préférence métallique ondulé logé dans une rainure 22 circulaire ménagée dans le volant 12 et ainsi disposée entre ce dernier et le premier disque 2. Cet anneau peut éventuellement être maintenu par rivetage sur le disque 2 ou sur le volant 12.

En position débrayée (figure 6),il assure la course de progressivité d par poussée du disque 2 et en position embrayée, il vient s'escamoter dans la rainure 22.

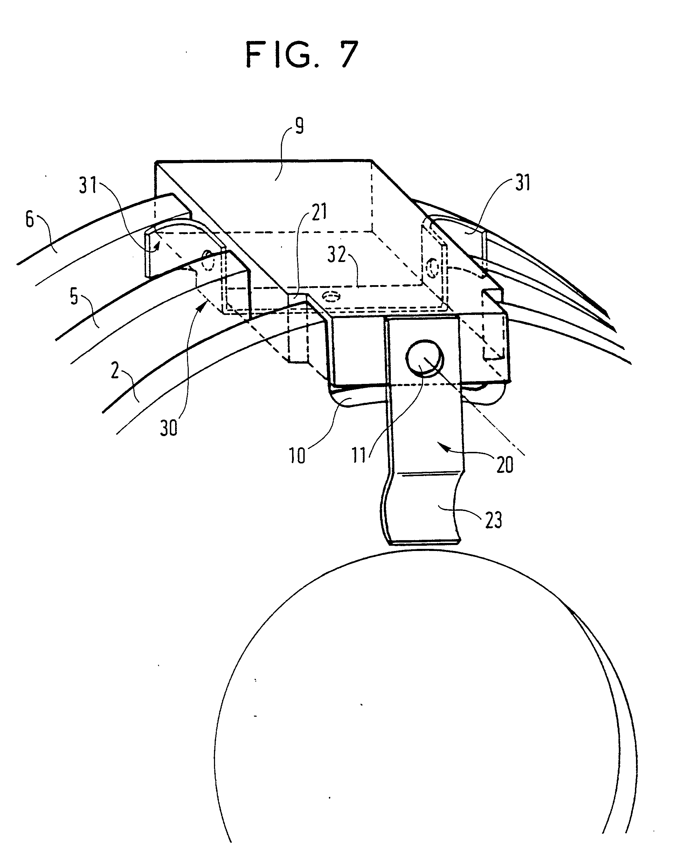

Une troisième variante est représentée sur la figure 7.

Le dispositif de progressivité 20 y est identique à celui de la première variante.

Le dispositif de plaquage 30 est ici réalisé d'une pièce unique par pliage, les deux lames élastiques 31 étant reliées par une lame centrale 32 formant un U avec les parties planes des lames 31 placées contre les faces latérales de la colonnette 9. Cette lame 32 est disposée contre la face intérieure de la colonnette 9 et y est fixée par rivetage.

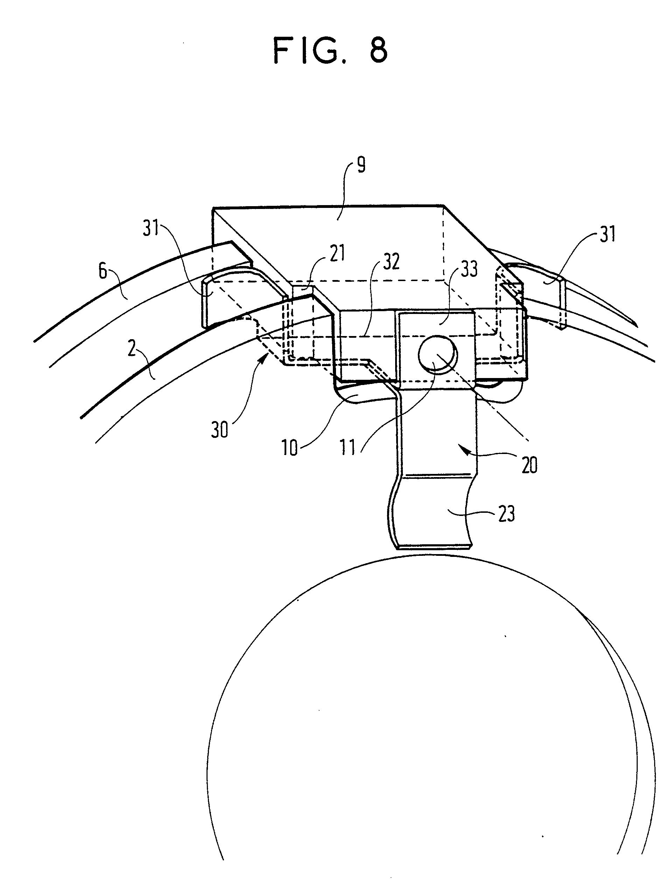

Les variantes représentées sur les figures 8 à 11 présentent des dispositifs de progressivité et de plaquage en une seule pièce.

Selon la figure 8 , ils sont du type à lames élastiques, le dispositif de progressivité étant constitué d'une lame 23 disposée radialement et le dispositif de plaquage comportant deux lames 31 reliée par une lame centrale 32. Cette lame centrale 32 est prolongée par une lame de fixation 33 perpendiculaire pliée à angle droit pour venir se positionner contre la face d'extrémité de la colonnette 9 où elle est pourvu d'un orifice recevant la vis de fixation 14 de la colonnette 9 sur le volant 12. La lame 23 a son extrémité non active pliée à angle droit pour venir se loger entre le disque 2 et la colonnette 9 où elle est soudée à la lame 33 pour former une pièce unique.

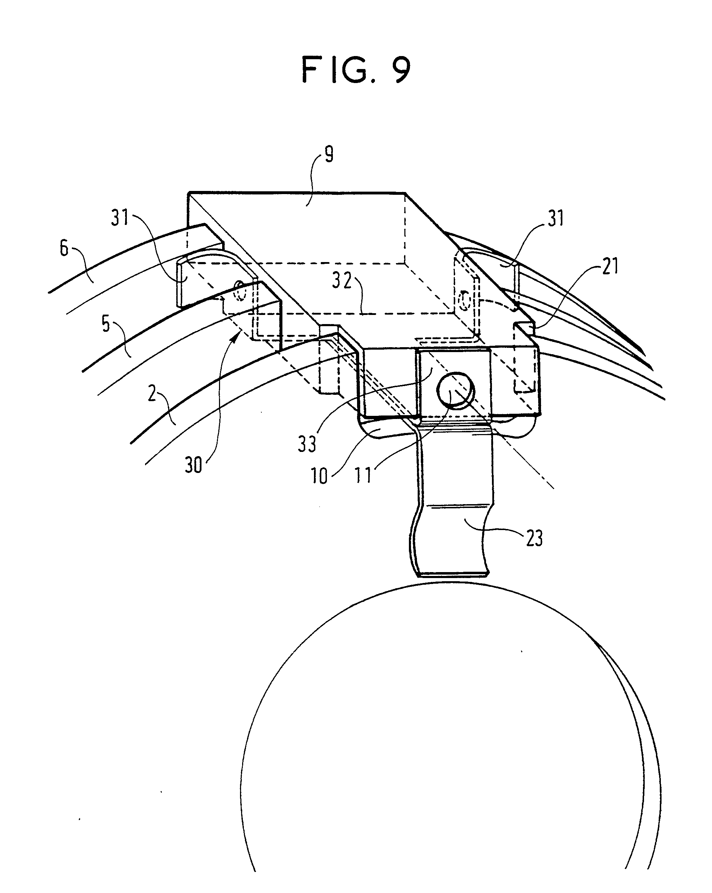

La figure 8 représente un embrayage à disque mené unique, dit monodisque. La figure 9 représente embrayage à deux disques menés avec le même agencement de lames qui est adapté aux embrayages multidisques quelconque par réglage de la longueur de la lame 33.

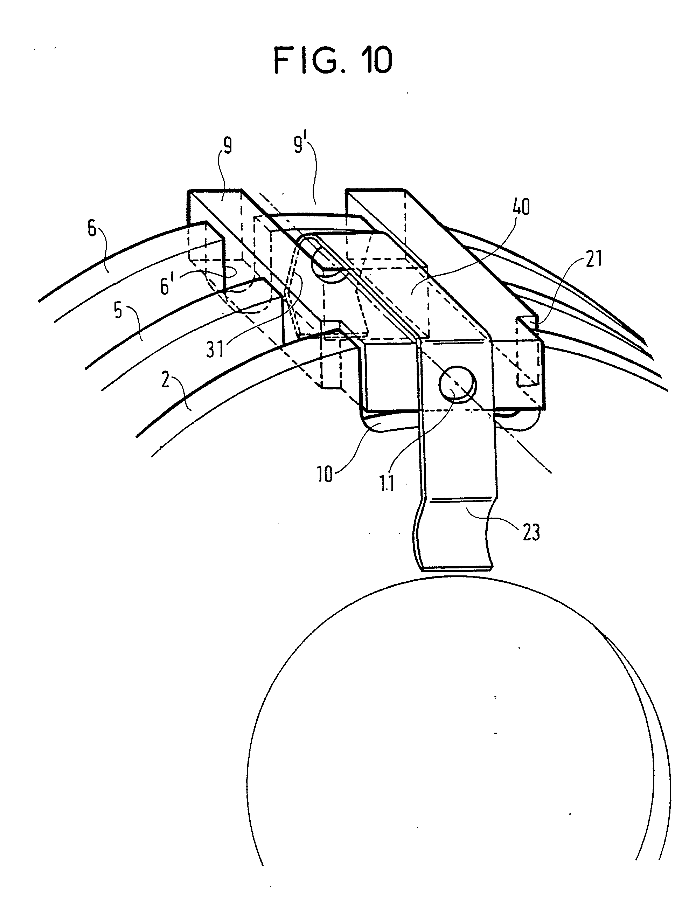

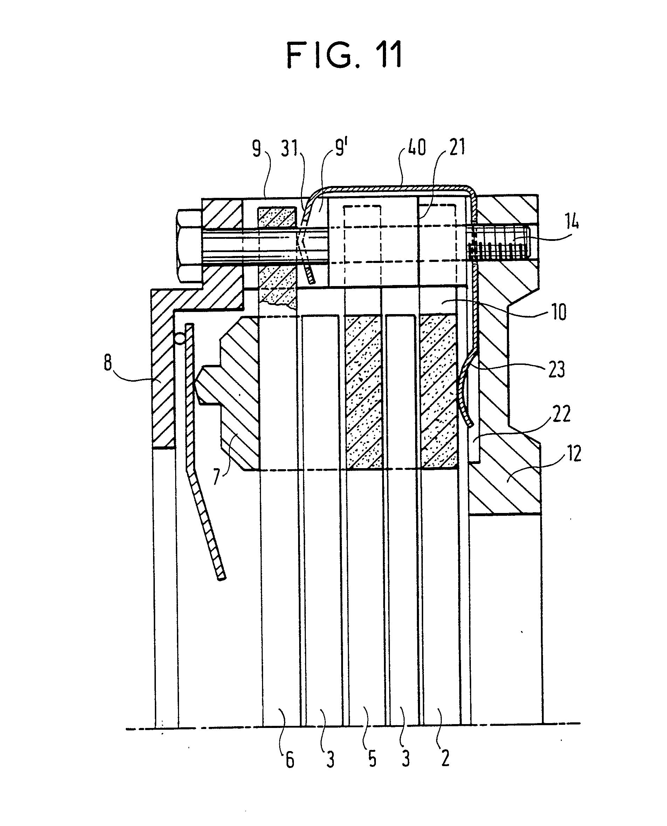

La variante représentée sur les figures 10 et 11 nécessite un agencement particulier de la colonnette 9 et du deuxième disque menant 6.

La colonnette 9 doit être une pièce séparée du couvercle fixée sur celui-ci. Elle est en forme de U et présente un orifice 9′ du côté du couvercle.

Le deuxième disque menant 6 au lieu de l'encoche classique présente deux encoches 6′ de plus petite dimension recevant les branches de la colonnette 9 en U. Un orifice de réception de la vis 14 est prévu entre ces deux encoches 6′.

Les dispositifs de progressivité et de plaquage sont constitués d'une seule lame pliée comportant un premier tronçon 23 radial de progressivité de lame élastique telle que décrite précédemment, un deuxième tronçon 40 perpendiculaire disposé contre la face extérieure de la colonnette 9 et un troisième tronçon 31 de plaquage formant une lame élastique recourbée poussant le deuxième disque menant 6 par sa partie se trouvant entre les encoches 6′ et pourvu d'un orifice de passage de la vis 14.

L'adaptation de cette variante à un embrayage multidisque quelconque se fait par réglage de la longueur du tronçon de lame 40.

Les agencements décrits précédemment peuvent être montés sur toutes les colonnettes 9 de l'embrayage ou non. L'on peut ainsi régler la raideur de la progressivité en installant plus ou moins de lames de progressivité. Les lames de plaquage, quant à elles, doivent être suffisantes pour supprimer tout jeu entre le plateau et le deuxième disque.

Bien que les systèmes décrits comportent tous l'association d'un dispositif de progressivité et d'un dispositif de plaquage, ces dispositifs ont leur fonction propre et seul l'un ou l'autre peut être monté sur l'embrayage.

De même bien que, dans les exemples décrits ci-dessus, le dispositif de progressivité soit monté dans l'interface volant / premier disque menant et le dispositif de plaquage dans l'interface plateau / deuxième disque menant, ces agencement préférés peuvent être inversés.

C'est ainsi que le dispositif de plaquage 30 représenté sur les figures 2 à 7 peut être monté entre le disque menant 6 et le plateau 7 et/ou entre le disque menant 2 et le volant 12 (dans ce dernier cas le dispositif de progressivité 20 tel que représenté est impérativement supprimé).

Il en est de même du dispositif de progressivité 20 représenté sur ces figures. Lorsque ce dispositif 20 est monté côté plateau 7, c'est ce plateau 7 qui porte la rainure 22 associée. Dans le cas des figures 2, 3, 4 et 7, la colonnette 9 est séparée du couvercle 8 et fixée à celui-ci avec interposition de la partie de fixation de la lame 20 qui se trouve contre l'extrémité côté couvercle de la colonnette 9.

Selon les variantes représentées sur les figures 8 à 11, la position des pièces uniques peut également être inversée, de la même façon. Dans le cas d'un agencement inverse, la colonnette 9 garde une forme en U mais également inversée et c'est le premier disque menant 2 qui comporte deux petites encoches.

Dans l'exemple des figures 10 et 11, la lame 23 peut par ailleurs être supprimée, l'agencement ne comportant ainsi qu'un dispositif de plaquage 30 fixé à la colonnette 9.

## Revendications (Revendications pour l'(les) Etat(s) contractant(s) suivant(s): AT, BE, CH, DE, DK, ES, GB, GR, IE, IT, LI, LU, MC, NL, PT, SE)

1. Embrayage à disques de friction structuraux, en particulier en carbone-carbone comprenant:
- un volant moteur (12),
- un premier disque menant (2), réalisant une première interface non active entre lui et le volant (12),
- au moins un disque mené (3) relié à un arbre de sortie, un disque menant (5) étant éventuellement intercalé entre chaque paire adjacente éventuelle de disques menés (3),
- un deuxième disque menant (6),
- un plateau de pression (7), réalisant une deuxième interface non active entre lui et le deuxième disque menant (6),
- un couvercle (8) comportant un mécanisme actionnable de poussée du plateau (7) et pourvu de colonnettes (9) logées dans des encoches radiales (10) des disques menants (2,5,6) et fixées au volant (12),
embrayage caractérisé en ce qu'il comporte un dispositif dit de progressivité (20) intercalé dans au moins l'une des interfaces non actives et poussant le disque menant (2,6) de l'interface vers le disque mené (3) adjacent contre un agencement de butée (21).

2. Embrayage selon la revendication 1, caractérisé en ce que le dispositif de progressivité (20) est constitué d'un anneau ondulé logé dans une rainure (22) circulaire ménagée dans la pièce (12,7) formant l'interface avec le disque menant (2,6).

3. Embrayage selon la revendication 1, caractérisé en ce que le dispositif de progressivité (20) est constitué d'au moins une lame élastique métallique radiale disposée contre une face d'extrémité de la colonnette (9) et dont l'extrémité active (23) recourbée est en appui sur le disque menant (2,6) et est logée dans une rainure (22) radiale ménagée dans la pièce (12,7) formant l'interface avec le disque menant (2,6).

4. Embrayage selon la revendication 3, caractérisé en ce que la lame comporte un tronçon comportant un orifice et disposé entre l'extrémité de la colonnette (9) et la pièce (12,7) formant l'interface avec le disque menant (2,6), cet orifice recevant le moyen de fixation du couvercle (8) sur le volant (12).

5. Embrayage selon l'une quelconque des revendications précédentes, caractérisé en ce que l'agencement de butée est constitué d'au moins un épaulement (21) ménagé sur la colonnette (9), sur lequel est en butée le bord de l'encoche (10) du disque menant (2,6).

6. Embrayage selon l'une quelconque des revendications précédentes, caractérisé en ce qu'un dispositif dit de plaquage (30) est associé au dispositif de progressivité (20), ce dispositif de plaquage (30) comportant un moyen de pression du disque menant (6,2) de l'autre interface non active contre la pièce (7,12) adjacente.

7. Embrayage selon la revendication 6, caractérisé en ce que le dispositif de plaquage (30) comprend au moins une lame élastique métallique (31) disposée entre le disque menant (6,2) de l'interface et le disque menant (5) le plus proche et dont l'extrémité active recourbée vient presser le disque (6,2) de l'interface contre la pièce (7,12) adjacente.

8. Embrayage selon la revendication 7, caractérisé en ce que le dispositif de plaquage (30) comprend deux lames (31) disposées contre les faces latérales de la colonnette (9).

9. Embrayage selon la revendication 7, caractérisé en ce que les colonnettes (9) sont en forme de U présentant un orifice (9′) du côté de la pièce (7,12) de l'interface, le disque menant (6,2) présente deux encoches (6′) recevant les branches de la colonnette (9) et la lame (31) est disposée dans l'orifice (9′) et pousse le disque menant (6) entre les encoches (6′).

10. Embrayage selon l'une quelconque des revendications 6 à 9, caractérisé en ce que le dispositif de progressivité (20) et le dispositif de plaquage (30) sont en une seule pièce.

## Revendications (Revendications pour l'(les) Etat(s) contractant(s) suivant(s): FR)

1. Embrayage à disques de friction structuraux, en particulier en carbone-carbone comprenant:
- un volant moteur (12),
- un premier disque menant (2), réalisant une première interface non active entre lui et le volant (12),
- au moins un disque mené (3) relié à un arbre de sortie, un disque menant (5) étant éventuellement intercalé entre chaque paire adjacente éventuelle de disques menés (3),
- un deuxième disque menant (6),
- un plateau de pression (7), réalisant une deuxième interface non active entre lui et le deuxième disque menant (6),
- un couvercle (8) comportant un mécanisme actionnable de poussée du plateau (7) et pourvu de colonnettes (9) logées dans des encoches radiales (10) des disques menants (2,5,6) et fixées au volant (12),
embrayage comportant un dispositif dit de progressivité (20) intercalé dans au moins l'une des interfaces non actives et poussant le disque menant (2,6) de l'interface vers le disque mené (3) adjacent contre un agencement de butée (21), caractérisé en ce que le dispositif de progressivité (20) est constitué d'un anneau ondulé logé dans une rainure (22) circulaire ménagée dans la pièce (12,7) formant l'interface avec le disque menant (2,6).

2. Embrayage à disques de friction structuraux, en particulier en carbone-carbone comprenant:
- un volant moteur (12),
- un premier disque menant (2), réalisant une première interface non active entre lui et le volant (12),
- au moins un disque mené (3) relié à un arbre de sortie, un disque menant (5) étant éventuellement intercalé entre chaque paire adjacente éventuelle de disques menés (3),
- un deuxième disque menant (6),
- un plateau de pression (7), réalisant une deuxième interface non active entre lui et le deuxième disque menant (6),
- un couvercle (8) comportant un mécanisme actionnable de poussée du plateau (7) et pourvu de colonnettes (9) logées dans des encoches radiales (10) des disques menants (2,5,6) et fixées au volant (12),
embrayage comportant un dispositif dit de progressivité (20) intercalé dans au moins l'une des interfaces non actives et poussant le disque menant (2,6) de l'interface vers le disque mené (3) adjacent contre un agencement de butée (21), caractérisé en ce que le dispositif de progressivité (20) est constitué d'au moins une lame élastique métallique radiale disposée contre une face d'extrémité de la colonnette (9) et dont l'extrémité active (23) recourbée est en appui sur le disque menant (2,6) et est logée dans une rainure (22) radiale ménagée dans la pièce (12,7) formant l'interface avec le disque menant (2,6).

3. Embrayage selon la revendication 2, caractérisé en ce que la lame comporte un tronçon comportant un orifice et disposé entre l'extrémité de la colonnette (9) et la pièce (12,7) formant l'interface avec le disque menant (2,6), cet orifice recevant le moyen de fixation du couvercle (8) sur le volant (12).

4. Embrayage selon l'une quelconque des revendications précédentes, caractérisé en ce que l'agencement de butée est constitué d'au moins un épaulement (21) ménagé sur la colonnette (9), sur lequel est en butée le bord de l'encoche (10) du disque menant (2,6).

5. Embrayage selon l'une quelconque des revendications précédentes, caractérisé en ce qu'un dispositif dit de plaquage (30) est associé au dispositif de progressivité (20), ce dispositif de plaquage (30) comportant un moyen de pression du disque menant (6,2) de l'autre interface non active contre la pièce (7,12) adjacente.

6. Embrayage selon la revendication 5, caractérisé en ce que le dispositif de plaquage (30) comprend au moins une lame élastique métallique (31) disposée entre le disque menant (6,2) de l'interface et le disque menant (5) le plus proche et dont l'extrémité active recourbée vient presser le disque (6,2) de l'interface contre la pièce (7,12) adjacente.

7. Embrayage selon la revendication 6, caractérisé en ce que le dispositif de plaquage (30) comprend deux lames (31) disposées contre les faces latérales de la colonnette (9).

8. Embrayage selon la revendication 6, caractérisé en ce que les colonnettes (9) sont en forme de U présentant un orifice (9') du côté de la pièce (7,12) de l'interface, le disque menant (6,2) présente deux encoches (6') recevant les branches de la colonnette (9) et la lame (31) est disposée dans l'orifice (9') et pousse le disque menant (6) entre les encoches (6').

9. Embrayage selon l'une quelconque des revendications 5 à 8, caractérisé en ce que le dispositif de progressivité (20) et le dispositif de plaquage (30) sont en une seule pièce.

## Patentansprüche (Patentansprüche für folgende(n) Vertragsstaat(en): AT, BE, CH, DE, DK, ES, GB, GR, IE, IT, LI, LU, MC, NL, PT, SE)

1. Kupplung mit strukturellen Reibungsscheiben, insbesondere auf Karbon-Karbon-Basis,
- mit einem motorseitigen Schwungrad (12),
- mit einer ersten Antriebsscheibe (2), die einen ersten nicht aktiven Übergang zwischen sich und dem Schwungrad (12) bildet,
- mit mindestens einer angetriebenen Scheibe (3), die mit einer Ausgangswelle verbunden ist, wobei ggf. eine Antriebsscheibe (5) zwischen jedem eventuellen benachbarten Paar von angetriebenen Scheiben (3) liegt,
- mit einer zweiten Antriebsscheibe (6),
- mit einer Anpreßplatte (7), die einen zweiten nicht aktiven Übergang zwischen sich und der zweiten Antriebsscheibe (6) bildet,
- und mit einem Deckel (8), der einen Betätigungsmechanismus zum Anpressen der Platte (7) sowie Säulen (9) enthält, die in radialen Nuten (10) der Antriebsscheiben (2, 5, 6) liegen und am Schwungrad (12) befestigt sind, dadurch gekennzeichnet, daß eine Progressivitätsvorrichtung (20) in mindestens einen der nicht aktiven Übergänge eingefügt ist und die Antriebsscheibe (2, 6) des Übergangs gegen die benachbarte angetriebene Scheibe (3) und gegen eine Anschlageinrichtung (21) drückt.

2. Kupplung nach Anspruch 1, dadurch gekennzeichnet, daß die Progressivitätsvorrichtung (20) aus einem gewellten Ring besteht, der in einer kreisförmigen Rinne (22) liegt, welche in dem den Übergang mit der Antriebsscheibe (2, 6) bildenden Bauteil (12, 7) ausgebildet ist.

3. Kupplung nach Anspruch 1, dadurch gekennzeichnet, daß die Progressivitätsvorrichtung (20) aus mindestens einer radialen elastischen Metallamelle besteht, die an einem Ende einer Säule (9) anliegt und deren aktives umgebogenes Ende (23) gegen die Antriebsscheibe (2, 6) drückt und in einer radialen Rinne (22) angeordnet ist, die in dem den Übergang mit der angetriebenen Scheibe (2, 6) bildenden Bauteil (12, 7) ausgebildet ist.

4. Kupplung nach Anspruch 3, dadurch gekennzeichnet, daß die Lamelle einen Abschnitt mit einer Öffnung besitzt, der zwischen dem Ende der Säule (9) und dem den Übergang mit der angetriebenen Scheibe (2, 6) bildenden Bauteil (12, 7) angeordnet ist, wobei diese Öffnung die Mittel zur Befestigung des Deckels (8) auf dem Schwungrad (12) aufnimmt.

5. Kupplung nach einem beliebigen der vorhergehenden Ansprüche, dadurch gekennzeichnet, daß die Anschlageinrichtung aus mindestens einer Schulter (21) besteht, die an der Säule (9) ausgebildet ist und an der der Rand der Nut (10) der Antriebsscheibe (2, 6) anliegt.

6. Kupplung nach einem beliebigen der vorhergehenden Ansprüche, dadurch gekennzeichnet, daß die Anpreßvorrichtung (30) der Progressivitätsvorrichtung (20) zugeordnet ist, wobei die Anpreßvorrichtung (30) ein Mittel aufweist, das die Antriebsscheibe (6, 2) des anderen nicht aktiven Übergangs gegen das benachbarte Bauteil (7, 12) drückt.

7. Kupplung nach Anspruch 6, dadurch gekennzeichnet, daß die Anpreßvorrichtung (30) mindestens eine elastische Metallamelle (31) aufweist, die zwischen der Antriebsscheibe (6, 2) des Übergangs und der nächstliegenden angetriebenen Scheibe (5) liegt und deren aktives umgebogenes Ende die Scheibe (6, 2) gegen das benachbarte Bauteil (7, 12) drückt.

8. Kupplung nach Anspruch 7, dadurch gekennzeichnet, daß die Anpreßvorrichtung (30) zwei Lamellen (31) aufweist, die an den Seitenflächen der Säule (9) anliegen.

9. Kupplung nach Anspruch 7, dadurch gekennzeichnet, daß die Säulen (9) U-förmig sind und eine Öffnung (9') auf der Seite des Bauteils (7, 12) des Übergangs besitzen, daß die Antriebsscheibe (6, 2) zwei Nuten (6') besitzt, die die Zweige der Säule (9) aufnehmen, und daß die Lamelle (31) in der Öffnung (9') liegt und die Antriebsscheibe (6) zwischen den Nuten (6') unter Druck setzt.

10. Kupplung nach einem beliebigen der Ansprüche 6 bis 9, dadurch gekennzeichnet, daß die Progressivitätsvorrichtung (20) und die Anpreßvorrichtung (30) ein gemeinsames Bauteil bilden.

## Patentansprüche (Patentansprüche für folgende(n) Vertragsstaat(en): FR)

1. Kupplung mit strukturellen Reibungsscheiben, insbesondere auf Karbon-Karbon-Basis,
- mit einem motorseitigen Schwungrad (12),
- mit einer ersten Antriebsscheibe (2), die einen ersten nicht aktiven Übergang zwischen sich und dem Schwungrad (12) bildet,
- mit mindestens einer angetriebenen Scheibe (3), die mit einer Ausgangswelle verbunden ist, wobei ggf. eine Antriebsscheibe (5) zwischen jedem eventuellen benachbarten Paar von angetriebenen Scheiben (3) liegt,
- mit einer zweiten Antriebsscheibe (6),
- mit einer Anpreßplatte (7), die einen zweiten nicht aktiven Übergang zwischen sich und der zweiten Antriebsscheibe (6) bildet,
- und mit einem Deckel (8), der einen Betätigungsmechanismus zum Anpressen der Platte (7) sowie Säulen (9) enthält, die in radialen Nuten (10) der Antriebsscheiben (2, 5, 6) liegen und am Schwungrad (12) befestigt sind, wobei eine Progressivitätsvorrichtung (20) in mindestens einen der nicht aktiven Übergänge eingefügt ist und die Antriebsscheibe (2, 6) des Übergangs gegen die benachbarte angetriebene Scheibe (3) und gegen eine Anschlageinrichtung (21) drückt, dadurch gekennzeichnet, daß die Progressivitätsvorrichtung (20) aus einem gewellten Ring besteht, der in einer kreisförmigen Rinne (22) liegt, welche in dem den Übergang mit der Antriebsscheibe (2, 6) bildenden Bauteil (12, 7) ausgebildet ist.

2. Kupplung nach Anspruch 1, dadurch gekennzeichnet, daß die Progressivitätsvorrichtung (20) aus mindestens einer radialen elastischen Metallamelle besteht, die an einem Ende einer Säule (9) anliegt und deren aktives umgebogenes Ende (23) gegen die Antriebsscheibe (2, 6) drückt und in einer radialen Rinne (22) angeordnet ist, die in dem den Übergang mit der angetriebenen Scheibe (2, 6) bildenden Bauteil (12, 7) ausgebildet ist.

3. Kupplung nach Anspruch 2, dadurch gekennzeichnet, daß die Lamelle einen Abschnitt mit einer Öffnung besitzt, der zwischen dem Ende der Säule (9) und dem den Übergang mit der angetriebenen Scheibe (2, 6) bildenden Bauteil (12, 7) angeordnet ist, wobei diese Öffnung die Mittel zur Befestigung des Deckels (8) auf dem Schwungrad (12) aufnimmt.

4. Kupplung nach einem beliebigen der vorhergehenden Ansprüche, dadurch gekennzeichnet, daß die Anschlageinrichtung aus mindestens einer Schulter (21) besteht, die an der Säule (9) ausgebildet ist und an der der Rand der Nut (10) der Antriebsscheibe (2, 6) anliegt.

5. Kupplung nach einem beliebigen der vorhergehenden Ansprüche, dadurch gekennzeichnet, daß die Anpreßvorrichtung (30) der Progressivitätsvorrichtung (20) zugeordnet ist, wobei die Anpreßvorrichtung (30) ein Mittel aufweist, das die Antriebsscheibe (6, 2) des anderen nicht aktiven Übergangs gegen das benachbarte Bauteil (7, 12) drückt.

6. Kupplung nach Anspruch 5, dadurch gekennzeichnet, daß die Anpreßvorrichtung (30) mindestens eine elastische Metallamelle (31) aufweist, die zwischen der Antriebsscheibe (6, 2) des Übergangs und der nächstliegenden angetriebenen Scheibe (5) liegt und deren aktives umgebogenes Ende die Scheibe (6, 2) gegen das benachbarte Bauteil (7, 12) drückt.

7. Kupplung nach Anspruch 6, dadurch gekennzeichnet, daß die Anpreßvorrichtung (30) zwei Lamellen (31) aufweist, die an den Seitenflächen der Säule (9) anliegen.

8. Kupplung nach Anspruch 6, dadurch gekennzeichnet, daß die Säulen (9) U-förmig sind und eine Öffnung (9') auf der Seite des Bauteils (7, 12) des Übergangs besitzen, daß die Antriebsscheibe (6, 2) zwei Nuten (6') besitzt, die die Zweige der Säule (9) aufnehmen, und daß die Lamelle (31) in der Öffnung (9') liegt und die Antriebsscheibe (6) zwischen den Nuten (6') unter Druck setzt.

9. Kupplung nach einem beliebigen der Ansprüche 5 bis 8, dadurch gekennzeichnet, daß die Progressivitätsvorrichtung (20) und die Anpreßvorrichtung (30) ein gemeinsames Bauteil bilden.

## Claims (Claims for the following Contracting State(s): AT, BE, CH, DE, DK, ES, GB, GR, IE, IT, LI, LU, MC, NL, PT, SE)

1. A clutch with structural friction plates, especially of carbon-carbon, comprising:
a drive flywheel (12),
a first driving plate (2) forming a first non-active interface with the flywheel (12),
at least one driven plate (3) connected to an output shaft, a driving plate (5) possibly being interposed between each possibly adjacent pair of driven plates (3),
a second driving plate (6),
a thrust plate (7) forming a second non-active interface with the second driving plate (6),
a casing (8) with a mechanism operable to apply pressure to the thrust plate (7) and provided with bars (9) fitted into radial recesses (10) of the driving plates (2, 5, 6) and fixed to the flywheel (12),
the clutch being characterized in that it includes a "progressive" device (20) interposed in at least one of the non-active interfaces and urging the driving plate (2, 6) of the interface towards the adjacent driven plate (3), against abutment means (21).

2. A clutch according to claim 1, characterized in that the progressive device (20) is formed by a corrugated ring fitted in a circular groove (22) recesses into the part (12, 7) forming the interface with the driving plate (2, 6).

3. A clutch according to claim 1, characterized in that the progressive device (20) is formed by at least one resilient, metal, radial tongue disposed against an end face of the bar (9) and whose curved operative end (23) is applied to the driving plate (2, 6) and is fitted in a radial groove (22) recessed into the part (12, 7) forming the interface with the driving plate (2, 6).

4. A clutch according to claim 3, characterized in that the tongue has a part with a hole, disposed between the end of the bar (9) and the part (12, 7) forming the interface with the driving plate (2, 6), this hole accommodating the means fixing the casing (8) to the flywheel (12).

5. A clutch according to any one of the preceding claims, characterized in that the abutment means (21) is formed by at least one shoulder (21) on the bar (9), against which the edge of the recess (10) of the driving plate (2, 6) abuts.

6. A clutch according to any one of the preceding claims, characterized in that a "packing-up" device (30) is associated with the progressive device (20), the packing-up device (30) comprising means for pressing the driving plate (6, 2) of the other non-active interface against the adjacent part (7, 12).

7. A clutch according to claim 6, characterized in that the packing-up device (30) comprises at least one resilient metal tongue (31) located between the driving plate (6, 2) of the interface and the next adjacent driving plate (5), and of which the operative curved end presses the plate (6, 2) of the interface against the adjacent part (7, 12).

8. A clutch according to claim 7, characterized in that the packing-up device (30) comprises two tongues (31) located against the side faces of the bar (9).

9. A clutch according to claim 7, characterized in that the bars (9) are U-shaped with an opening (9') on the side of the part (7, 12) of the interface, the driving plate (6, 2) having two recesses (6') receiving the limbs of the bar (9) and the tongue (31) being located in the opening (9') and pressing against the driving plate (6) between the recesses (6').

10. A clutch according to any one of claims 6 to 9, characterized in that the progressive device (20) and the packing-up device (30) are in one piece.

## Claims (Claims for the following Contracting State(s): FR)

1. A clutch with structural friction plates, especially of carbon-carbon, comprising:
a drive flywheel (12),
a first driving plate (2) forming a first non-active interface with the flywheel (12),
at least one driven plate (3) connected to an output shaft, a driving plate (5) possibly being interposed between each possibly adjacent pair of driven plates (3),
a second driving plate (6),
a thrust plate (7) forming a second non-active interface with the second driving plate (6),
a casing (8) with a mechanism operable to apply pressure to the thrust plate (7) and provided with bars (9) fitted into radial recesses (10) of the driving plates (2, 5, 6) and fixed to the flywheel (12),
the clutch including a "progressive" device (20) interposed in at least one of the non-active interfaces and urging the driving plate (2, 6) of the interface towards the adjacent driven plate (3), against abutment means (21), the clutch being characterized in that the progressive device (20) is formed by a corrugated ring fitted in a circular groove (22) recesses into the part (12, 7) forming the interface with the driving plate (2, 6).

2. A clutch with structural friction plates, especially of carbon-carbon, comprising:
a drive flywheel (12),
a first driving plate (2) forming a first non-active interface with the flywheel (12),
at least one driven plate (3) connected to an output shaft, a driving plate (5) possibly being interposed between each possibly adjacent pair of driven plates (3),
a second driving plate (6),
a thrust plate (7) forming a second non-active interface with the second driving plate (6),
a casing (8) with a mechanism operable to apply pressure to the thrust plate (7) and provided with bars (9) fitted into radial recesses (10) of the driving plates (2, 5, 6) and fixed to the flywheel (12),
the clutch including a "progressive" device (20) interposed in at least one of the non-active interfaces and urging the driving plate (2, 6) of the interface towards the adjacent driven plate (3), against abutment means (21), the clutch being characterized in that the progressive device (20) is formed by at least one resilient, metal, radial tongue disposed against an end face of the bar (9) and whose curved operative end (23) is applied to the driving plate (2, 6) and is fitted in a radial groove (22) recessed into the part (12, 7) forming the interface with the driving plate (2, 6).

3. A clutch according to claim 2, characterized in that the tongue has a part with a hole, disposed between the end of the bar (9) and the part (12, 7) forming the interface with the driving plate (2, 6), this hole accommodating the means fixing the casing (8) to the flywheel (12).

4. A clutch according to any one of the preceding claims, characterized in that the abutment means (21) is formed by at least one shoulder (21) on the bar (9), against which the edge of the recess (10) of the driving plate (2, 6) abuts.

5. A clutch according to any one of the preceding claims, characterized in that a "packing-up" device (30) is associated with the progressive device (20), the packing-up device (30) comprising means for pressing the driving plate (6, 2) of the other non-active interface against the adjacent part (7, 12).

6. A clutch according to claim 5, characterized in that the packing-up device (30) comprises at least one resilient metal tongue (31) located between the driving plate (6, 2) of the interface and the next adjacent driving plate (5), and of which the operative curved end presses the plate (6, 2) of the interface against the adjacent part (7, 12).

7. A clutch according to claim 6, characterized in that the packing-up device (30) comprises two tongues (31) located against the side faces of the bar (9).

8. A clutch according to claim 6, characterized in that the bars (9) are U-shaped with an opening (9') on the side of the part (7, 12) of the interface, the driving plate (6, 2) having two recesses (6') receiving the limbs of the bar (9) and the tongue (31) being located in the opening (9') and pressing against the driving plate (6) between the recesses (6').

9. A clutch according to any one of claims 5 to 8, characterized in that the progressive device (20) and the packing-up device (30) are in one piece.
